Europäisches Patentamt

European Patent Office

Office européen des brevets

(11) Publication number: **0 135 485**

**B1**

# (12) EUROPEAN PATENT SPECIFICATION

(45) Date of publication of patent specification: **21.09.88**

(21) Application number: **84830220.4**

(22) Date of filing: **19.07.84**

(51) Int. Cl.⁴: **B 05 B 13/02,** B 65 G 13/00, B 65 G 13/02

(54) **Process and apparatus for superficial treatment of cylindrical bodies, in particular for painting operation.**

(30) Priority: **29.07.83 IT 2234783**

(43) Date of publication of application:
**27.03.85 Bulletin 85/13**

(45) Publication of the grant of the patent:
**21.09.88 Bulletin 88/38**

(84) Designated Contracting States:
**AT BE CH DE FR GB LI LU NL SE**

(56) References cited:
**DE-A-2 618 112**
**US-A-2 519 177**
**US-A-3 722 657**

(73) Proprietor: **Leva, Luigi**
**Via Albertelli 10**
**I-20156 Milano (IT)**

(72) Inventor: **Leva, Luigi**
**Via Albertelli 10**
**I-20156 Milano (IT)**

(74) Representative: **Rapisardi, Mariacristina, Dr. Proc.**
**STUDIO TECNICO LEGALE RAPISARDI Largo V Alpini 15**
**I-20145 Milano (IT)**

Courier Press, Leamington Spa, England.

## Description

This invention relates to a new process and apparatus for surface treating cylindrical bodies, in particular for effecting a painting operation thereon.

Surface treating of cylindrical bodies, such as, for example, metal barrels provided or not with a bottom or cover, water heater shells and the like, comprising, in particular, subjecting the bodies to a spray operation in order to externally or internally apply a paint thereon with the aid of manual or automatic devices, is normally performed in a spray booth in which appropriate spray devices are provided and into which the bodies to be treated are introduced after having caused them to divert from their line of production to which the bodies are brought back once the process is carried out. During process, said bodies are driven in rotation so as to uniformly treat them over their entire surface. Moreover, it is of great importance that the contact regions of said bodies with the holding and conveying means should be minimized thereby to prevent the contacted surfaces from being not thoroughly processed. According to a conventional technique utilizing apparatus known, provided inside a painting booth is a rolling device consisting of a number of generally truncated cone-shaped rolls of horizontally directed axis, onto which the cylindrical bodies—which also are disposed with horizontally directed axis—are charged and then driven in rotation.

In this way, the painting process becomes a long operation due to the idle times that are needed for having the drive rolls, and the cylindrical bodies carried thereon, set in rotation, for stopping this rotation following completion of the painting process, and for effecting the translation operations in order to charge and discharge the cylindrical bodies.

A further disadvantage of the above conventional technique is the friction phenomenon that is caused to occur upon charging the barrels onto the rolling device, with the risk of spark formation—dangerous in a painting room—if the rolling device is not stopped in due time.

Apparatus have furthermore been proposed which provide for conveying the cylindrical bodies and driving them in rotation, while lying with vertically directed axis, the bodies being held in suspended position by the aid of gripping means that engage upper portions of said bodies. These systems, too, have a number of disadvantages, in particular in that the suspended bodies are likely to swing and oscillate, which hinders a good painting operation. Practically, these apparatus have found very little application indeed. U.S.—A 3722657 discloses a process for the surface treatment of cylindrical bodies comprising a cylindrical body, disposed vertically, which is taken from a feeding conveyor and that is translated parallel to the plane of said conveyor over a turning station.

The cylindrical body is driven into rotation about its axis, which is orthogonal to the plane of the conveyor, and is translated, while still rotating it about its axis, parallel to said plane to a painting station in which is kept in rotation. From the painting station, while maintaining it in rotation, the cylindrical body is transported to a removing conveyor.

In DE—A—2618112 is disclosed an apparatus for spraying painting cylindrical bodies having a turning station, a painting station and a braking station.

In said apparatus the rotation of the cylindrical body does not take place about an axis which is orthogonal to the plane of the feeding conveyor.

This invention provides a new process, and a related apparatus, for the surface treating of cylindrical bodies, in particular for spray painting both the internal and external faces of said bodies, these new process and apparatus being so designed as to eliminate the disadvantages that are connected with the conventional technique.

The process is essentially characterized according to claim 1.

The apparatus for carrying out the above process is characterized according to claim 2.

A primary advantage that is achieved by the process and apparatus according to this invention is that they significantly reduce the idle times for starting the rolling device at each processing cycle, which results in increasing process efficiency up to values of 40% to 50% as compared with the processes of the conventional technique.

A further advantage is the greater safety that is ensured due to the absence or substantial reduction of the friction phenomena between the rotating cylindrical bodies and the rotating members of the rolling device, which permits spark formation in the processing booth, and, thus, the resultant danger of fire, to be prevented.

The fact of having the cylindrical bodies disposed with their axis directed vertically in the painting booth, as provided by the process according to the invention, further allows for the paint spray guns to be disposed in a vertical, outwardly directed position in which said spray guns are more accessible and easier to reach for maintenance purposes.

Further features and advantages of the process and apparatus of the invention will appear from the following description of a preferred embodiment thereof, which is shown, by way of a non restrictive example, on the accompanying drawings and which is related to a paint spray plant for spray-painting cylindrical bodies, in particular metal barrel or shells.

In the drawings:—

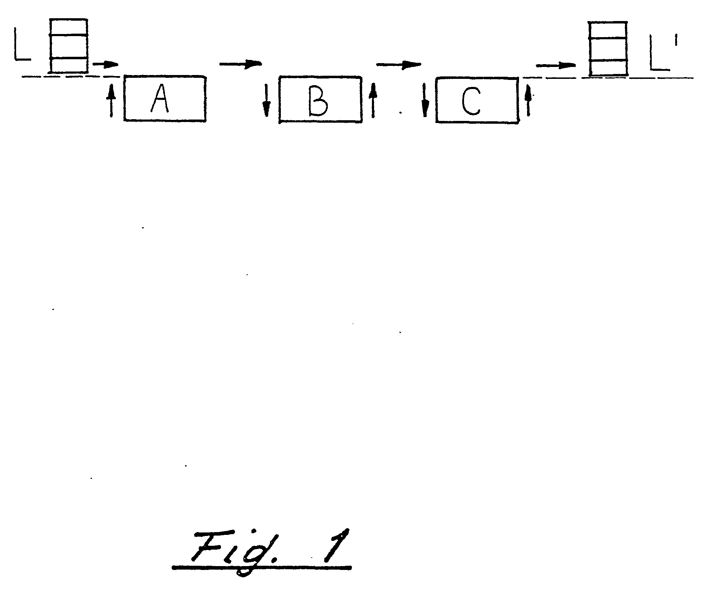

Figure 1 is a block diagram schematically showing a painting process;

Figure 2 is a front view of said plant;

Figure 3 is a plan view of the plant in Figure 2; and

Figure 4 is a detail front view showing a rotating unit on a greater scale.

With reference to the above figures, the block diagram in figure shows the station A in which a vertically disposed barrel having been removed from a production line L by conveying means of a conventional type, is driven in rotation about its vertical axis, is lifted, and is translated—while being kept rotating—to the station B in which a painting operation is carried out on the barrel which is disposed vertically and is rotating about its vertical axis. When the painting operation is completed, the barrel is lifted and is moved, without its rotation being stopped, to the slowing-down and braking station C from which the processed barrel is discharged, by conveying means of a conventional type to a production line L'.

The process takes place in sequence so that as soon as a processed barrel is carried away from the processing station B, a new barrel is charged into it without disrupting operations for stopping the rolling device and driving it again in rotation.

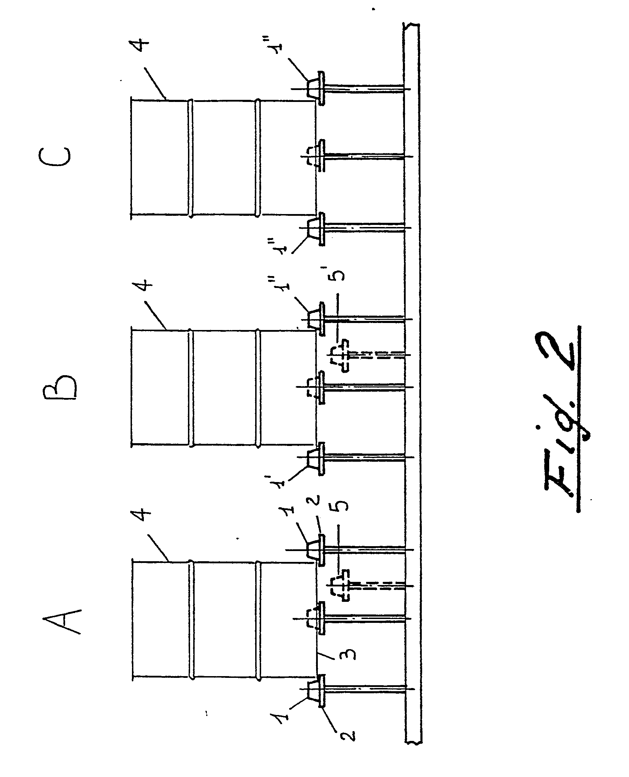

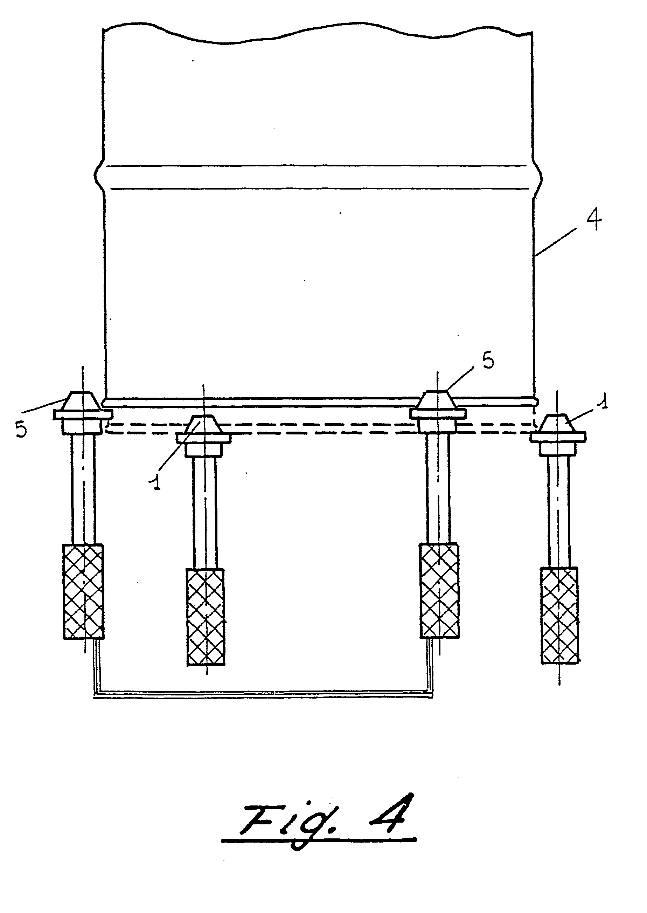

As shown in Figures 2—3 and in detail view, Figure 4, the processing plant comprises a first rotating unit formed of a set of three rolls 1 of truncated-cone shape and having a base 2 of increased diameter in order to afford an abutment surface for the lower face 3 of the vertically-directed-axis barrel 4 to bear against.

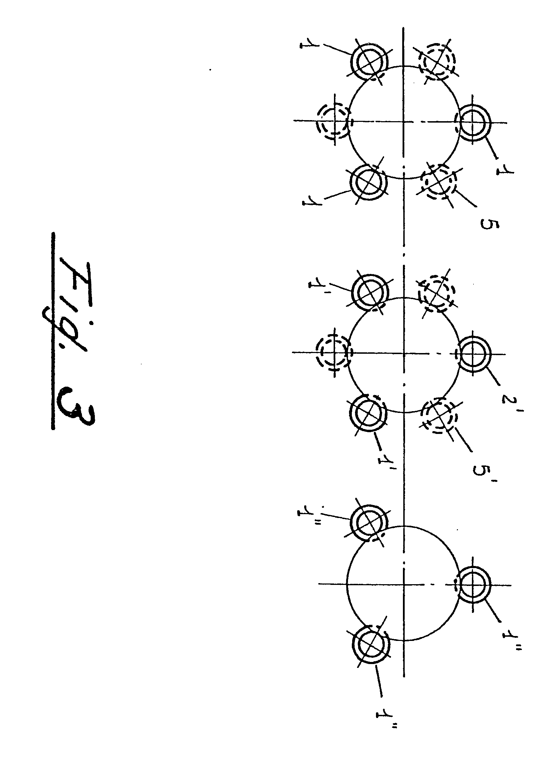

The vertically directed-axis rolls 1 are powered, adjustable speed rolls and are designed to drive the barrel 4 in rotation. Said rolls are circumferentially spaced apart by distances that are of, advantageously, 120° (see Figure 3).

Similar rotary units having rolls 1'—1'' are provided in the two subsequent processing and braking stations B—C respectively, and serve to support the barrel 4 therein and to drive it in rotation. The rolls 1'' in station C are idle rollers. Further provided are two translation units each of which consists of a set of three rotary rolls 5—5', respectively, that have a vertically directed axis and are of the same shape as the rolls 1—1'—1'' are. These rolls 5—5' are angularly offset—as seen in plan view, Figure 3—with respect to rolls 1—1'—1'', and are powered rolls designed to be movable both vertically and horizontally such that when displaced in a vertical direction, said rolls 5—5' will engage the barrel 4 to lift it from the position in which the barrel is bearing on the rotary rolls 1—1', whereas, when displaced in a horizontal direction, said rolls 5—5' cause the barrel 4 to be translated—while being kept rotating—from station A to station B and from station B to station C, respectively. Following each barrel translation, the rolls are moved back to their starting positions for a next cycle.

The processing station B may advantageously comprise a plurality of similar processing stations in order to have different stages of the painting operation carried out in a separate manner.

**Claims**

1. A process for the surface treatment of cylindrical bodies in particular for spray painting operations of both external and internal surfaces thereof, said process having in succession the following stages: to take at least one cylindrical body (4) from a feeding conveyor (L), to translate said cylindrical body parallel to the plane of said feeding conveyor over a turning station (A), said cylindrical body being disposed vertically, to drive the cylindrical body into rotation about its axis which is orthogonal to said plane of said feeding conveyor, to translate said cylindrical body, while still rotating it about its axis, parallel to said plane of said feed conveyor to a painting station (B), to keep the cylindrical body in rotation about its axis while it in said painting station, to transport said cylindrical body from said painting station, while maintaining it in rotation, to a removing conveyor, (L') characterized in that the transportation of said cylindrical body (4) from said turning station (A) to said painting station (B) is done by lifting the cylindrical body from said turning station prior to the translation parallel to the plane of said feed conveyor (L) whilst maintaining said cylindrical body rotating about its axis, at said painting station the cylindrical body is lowered onto painting station supports (1', 1''), said body still rotating about its axis, before said cylindrical body is placed on said removing conveyor it is first transported from said painting station to a braking station (C) to stop its rotation after which said cylindrical body is discharged onto said removing conveyor, said transportation of said cylindrical body from said painting station to said braking station is done by lifting said body from said painting station prior to a translation parallel to the plane of said feed conveyor, whilst maintaining said cylindrical body rotation about its axis, after said translation the cylindrical body is lowered onto said braking station, still rotating about its axis.

2. Apparatus for carrying out the process according to claim 1 having a feeding conveyor (L) for supplying at least one cylindrical body (4) to a turning station (A), said turning station having supporting members (1) for supporting the cylindrical body, said apparatus further having a painting station (B), which also has supporting members (1', 1'') for supporting said cylindrical body, a removing conveyor (L') as well as transportation means for transporting the cylindrical body station by station within the apparatus from the feeding conveyor to the removing conveyor, characterised in that said apparatus furthermore has a braking station (C), in that each supporting member (1'') is rotatable about its axis which is substantially orthogonal with the plane of said feeding conveyor and in that said transportation means consist of rotatable members (5, 5') each of which is rotatable about its axis which is substantially orthogonal with the plane of said feeding conveyors, each of which is movable parallel with respect to said plane of said feeding conveyor and each of which is movable parallel to the axes of said supporting members for lifting, lowering and translating said cylindrical body parallel as well as perpendicular to said supporting members, while rotating said body about its axis.

3. Apparatus according to claim 2 characterised in that said supporting members and said rotatable members comprise at least three rolls respectively, said rolls having their axes parallel to and offset with respect to the axis of said cylindrical body.

4. Apparatus according to claim 3 characterised in that each of said rolls has means to engage said vertically disposed cylindrical body (4) at its lower base (3) making reduced contact areas therewith.

5. Apparatus according to claim 3 characterised in that said rolls comprise a truncated cone element that is rigidly connected to one end of each roll, said truncated cone element having an enlarged base (2) defining an abutment surface to engage said lower base (3) of said cylindrical body, the axes of said cylindrical body and said truncated cones being parallel.

6. Apparatus according to claim 5 characterised in that the supporting members (1, 1', 1'') of the turning and painting stations as well as the rotatable members (5, 5') have powered rolls.

7. Apparatus according to claim 5 characterised in that said braking station comprises supporting members having idle rolls (1'').

**Patentansprüche**

1. Verfahren zur Oberflächenbehandlung zylindrischer Körper, insbesondere zur Sprühlackierung sowohl von deren äußeren, wie auch inneren Oberflächen, wobei dieses Verfahren die folgenden, nacheinander ablaufenden Schritte aufweist: Wegnehmen mindestens eines zylindrischen Körpers (4) von einem Zufuhrförderer (L), Versetzen dieses zylindrischen Körpers parallel zur Ebene dieses Zufuhrförderers über eine Drehstation (A), wobei dieser zylindrische Körper vertikal angeordnet ist, Bringen des zylindrischen Körpers in Rotation um seine Achse, die senkrecht zu dieser Ebene des Zufuhrförderers verläuft, Versetzen dieses zylindrischen Körpers parallel zur Ebene des Zufuhrförderers zu einer Lackierstation (B) noch während der Rotation um seine Achse, Aufrechterhalten der Rotation des zylindrischen Körpers um seine Achse während des Aufenthalts in dieser Lackierstation, Transportieren des zylindrischen Körpers unter Aufrechterhaltung der Rotation von dieser Lackierstation zu einem Abfuhrförderer (L'), dadurch gekennzeichnet, daß der Transport des zylindrischen Körpers (4) von der Drehstation (A) zu der Lackierstation (B) unter Anhebung des zylindrischen Körpers von der Drehstation vor der Versetzung parallel zur Ebene des Zufuhrförderers (L) erfolgt, während der zylindrische Körper in Rotation um seine Achse gehalten wird, daß der zylindrische Körper an der Lackierstation auf Lackierstation-Tragelemente (1', 1'') abgesenkt wird, wobei der Körper noch um seine Achse rotiert, daß der zylindrische Körper vor seiner Plazierung auf den Abfuhrförderer zunächst von der Lackierstation zu einer Bremsstation (C) transportiert wird, um seine Rotation zu beenden, wonach der zylindrische Körper auf dem Abfuhrförderer abgesetzt wird, daß der Transport des zylindrischen Körpers von der Lackierstation zur Bremsstation unter Anhebung dieses Körpers von der Lackierstation vor der Versetzung parallel zur Ebene des Zufuhrförderers erfolgt, während der zylindrische Körper in Rotation um seine Achse gehalten wird, und daß der zylindrische Körper nach dieser Versetzung auf die Bremsstation abgesenkt wird, wobei er noch um seine Achse rotiert.

2. Vorrichtung zur Durchführung des Verfahrens nach Anspruch 1, mit einem Zufuhrförderer (L) zur Zuführung wenigstens eines zylindrischen Körpers (4) zu einer Drehstation (A), die Tragelemente (1) zur Aufnahme des zylindrischen Körpers aufweist, weiterhin mit einer Lackierstation (B), die ebenfalls Tragelemente (1', 1'') zur Aufnahme des zylindrischen Körpers aufweist, einem Abfuhrförderer (L'), wie auch Transportmitteln zum Transport des zylindrischen Körpers von Station zu Station innerhalb der Vorrichtung von dem Zufuhrförderer zum Abfuhrförderer, dadurch gekennzeichnet, daß diese Vorrichtung weiterhin eine Bremsstation (C) aufweist, daß jedes Tragelement (1'') um seine Achse drehbar ist, die im wesentlichen senkrecht zur Ebene des Zufuhrförderers verläuft, und daß die Transportmittel aus rotierbaren Gliedern (5, 5') bestehen, von denen jedes um seine im wesentlichen senkrecht zur Ebene des Zufuhrförderers angeordnete Achse drehbar ist, von denen jedes parallel zu dieser Ebene des Zufuhrförderers bewegbar ist, und von denen jedes parallel zu den Achsen der Tragelemente zum Anheben, Absetzen und Verschieben des zylindrischen Körpers parallel und senkrecht zu diesen Tragelementen bewegbar ist, während dieser Körper um seine Achse rotiert.

3. Vorrichtung nach Anspruch 2, dadurch gekennzeichnet, daß diese Tragelemente und diese rotierbaren Glieder jeweils wenigstens drei Rollen aufweisen, deren Achsen parallel und versetzt zur Achse des zylindrischen Körpers angeordnet sind.

4. Vorrichtung nach Anspruch 3, dadurch gekennzeichnet, daß jede dieser Rollen Mittel zum Eingriff mit dem vertikal angeordneten zylindrischen Körper (4) an seiner unteren Basis (3) aufweist, um reduzierte Kontaktflächen herzustellen.

5. Vorrichtung nach Anspruch 3, dadurch gekennzeichnet, daß diese Rollen ein Kegelstumpfelement aufweisen, das fest mit einem Ende jeder Rolle verbunden ist, wobei das Kegelstumpfelement eine vergrößerte Basis (2) besitzt, die eine Anlagefläche beim Eingriff der unteren Basis (3) des zylindrischen Körpers bildet, und wobei die Achsen des zylindrischen Körpers und der Kegelstümpfe parallel sind.

6. Vorrichtung nach Anspruch 5, dadurch gekennzeichnet, daß die Tragelemente (1, 1', 1'') der Dreh- und Lackierstationen, wie auch der rotierbaren Glieder (5, 5') angetriebene Rollen aufweisen.

7. Vorrichtung nach Anspruch 5, dadurch gekennzeichnet, daß die Bremsstation Tragelemente mit Freilaufrollen (1'') aufweist.

**0 135 485**

## Revendications

1. Procédé de traitement de surface de corps cylindriques, destiné en particulier à des opérations de peinture par pulvérisation sur les deux surfaces extérieure et intérieure de ces corps cylindriques, ce procédé comportant successivement les étapes suivantes: prendre au moins un corps cylindrique (4) sur un convoyeur d'alimentation (L), transférer ce corps cylindrique parallèlement au convoyeur d'alimentation sur un poste de retournement (A), ce corps cylindrique étant disposé verticalement, faire tourner le corps cylindrique autour de son axe, cet axe étant orthogonal au plan du convoyeur d'alimentation, transférer le corps cylindrique, tout en continuant de le faire tourner sur son axe, parallèlement au plan du convoyeur d'alimentation pour l'amener à un poste de peinture (B), maintenir le corps cylindrique en rotation sur son axe pendant qu'il se trouve dans le poste de peinture, transporter ce corps cylindrique du poste de peinture, tout en le maintenant en rotation, vers un convoyeur d'enlèvement (L'), procédé caractérisé en ce que le transport du corps cylindrique (4) du poste de retournement (A) au poste de peinture (B), est effectué en soulevant le corps cylindrique du poste de retournement avant de la transférer parallèlement au plan du convoyeur d'alimentation (L) tout en maintenant ce corps cylindrique en rotation sur son axe, le corps cylindrique étant abaissé, dans le poste de peinture, sur des supports de poste de peinture (1', 1''), le corps cylindrique tournant toujours sur son axe, ce corps cylindrique, avant d'être placé sur le convoyeur d'enlèvement, étant tout d'abord transporté au poste de peinture à un poste de freinage (C), pour stopper sa rotation, après quoi le corps cylindrique est déchargé sur le convoyeur d'enlèvement, le transport du corps cylindrique du poste de peinture au poste de freinage étant effectué en soulevant ce corps cylindrique, du poste de peinture avant de le transférer parallèlement au plan du convoyeur d'alimentation, tout en maintenant ce corps cylindrique en rotation sur son axe, le corps cylindrique étant abaissé, après ce transfert, sur le poste de freinage, tout en tournant toujours sur son axe.

2. Appareil pour mettre en oeuvre le procédé selon la revendication 1, comportant un convoyeur d'alimentation (L) pour amener au moins un corps cylindrique (4) à un poste de retournement (A), ce poste de retournement comportant des éléments de support (1) pour supporter le corps cylindrique, cet appareil comportant, en outre, un poste de peinture (B) également muni d'éléments de support (1', 1'') pour supporter le corps cylindrique, un convoyeur d'enlèvement (L'), ainsi que des moyens de transport pour transporter le corps cylindrique, poste par poste, à l'intérieur de l'appareil, du convoyeur d'alimentation au convoyeur d'enlèvement, appareil caractérisé en ce qu'il comprend, en outre, un poste de freinage (C), en ce que chaque élément de support (1'') peut tourner sur son axe, ce dernier étant parfaitement orthogonal au plan du convoyeur d'alimentation, et en ce que les moyens de transport sont constitués par des éléments rotatifs (5, 5') pouvant tourner chacun sur son axe, qui est parfaitement orthogonal au plan du convoyeur d'alimentation, chacun de ces éléments rotatifs pouvant se déplacer parallèlement au plan du convoyeur d'alimentation, et chacun d'eux pouvant se déplacer parallèlement aux axes des éléments de support pour soulever, abaisser, et transférer le corps cylindrique, aussi bien parallèlement que perpendiculairement aux éléments de support, tout en faisant tourner le corps cylindrique sur son axe.

3. Appareil selon la revendication 2, caractérisé en ce que les éléments de support et les éléments rotatifs comprennent respectivement au moins trois galets, ces galets ayant leurs axes parallèles et décalés par rapport à l'axe du corps cylindrique.

4. Appareil selon la revendication 3, caractérisé en ce que chacun des galets comporte des moyens destinés à s'engager contre le corps cylindrique disposé verticalement (4), à sa base inférieure (3), de manière à former des zones de contact réduites avec celui-ci.

5. Appareil selon la revendication 3, caractérisé en ce que les galets comprennent un élément de cône tronqué fixé rigidement à une extrémité de chaque galet, cet élément de cône tronqué présentant une base agrandie (2) définissant une surface de butée destinée à venir en contact avec la base inférieur (3) du corps cylindriques, les axes du corps cylindrique et des cônes tronqués étant parallèles.

6. Appareil selon la revendication 5, caractérisé en ce que les éléments de support (1, 1', 1'') des postes de retournement et de peinture ainsi que les éléments rotatifs (5, 5') comportent des galets moteurs.

7. Appareil selon la revendication 5, caractérisé en ce que le poste de freinage comporte des éléments de support munis de galets en roue libre (1'').

L [box] → → A ↑ → B ↓ ↑ → C ↓ ↑ → [box] L'

$$Fig. 1$$

A    B    C

Fig. 2

*Fig. 3*

4

5

5

1

1

_Fig. 4_

4